# EUROPÄISCHE PATENTANMELDUNG

(11) **EP 0 872 226 A2**
(43) Veröffentlichungstag der Anmeldung: **21.10.1998**
(21) Anmeldenummer: 98106708.5
(22) Anmeldetag: 14.04.1998
(51) Int. Cl.: A61G 7/018

(54) **Aktives Medizinprodukt**

(30) Priorität: 15.04.1997 DE 19715642
(71) Anmelder: Hill-Rom GmbH, 47906 Kempten (DE)
(72) Erfinder: Paulweber, Karl Josef, 47906 Kempen (DE)
(74) Vertreter: Beyer, Rudi

(57) **Zusammenfassung**

Die Erfindung betrifft ein aktives Medizinprodukt, bei welchem auf den Bedienelementen (Handschalter, integriertes Folienbedienelement oder dergleichen) mindestens ein Sensor angebracht oder diesen zugeordnet ist, der zunächst einmal detektieren soll, ob der Bediener eine Funktion initiieren möchte. Dieser Sensor könnte beispielsweise als simple monostabile Taste ausgebildet sein (Totmanntaste), oder aber ein sensibles System darstellen, das auf Signale wie Wärme, Feuchtigkeit, Flüssigkeit, Erschütterungen oder dergleichen reagiert, die typischerweise von Bedienern, Patienten, Anwendern oder Betreibern ausgesendet oder verursacht werden. Mit dem so gebildeten Signal soll die Energiezufuhr für die Steuer-, Bedien- und Stellfunktion des aktiven Medizinproduktes freigegeben werden, also zum Beispiel Energiezufuhr für mindestens ein Bedienelement oder mehrere Bedienelemente, Freigabe für die Ausgangssignale und Energiezufuhr für die Logikelemente. Hierdurch wird ein Aktuator, ein Bedienelement oder eine Logikschaltung immer nur dann aktiv, wenn der Bediener das Freigabesignal ausgelöst hat. Hierdurch kann eine Eigenbewegung des Systems, bedingt durch einen ersten Fehler sicher ausgeschlossen werden.

## Beschreibung

Die Erfindung betrifft ein aktives Medizinprodukt - Liegemöbel, vornehmlich Krankenbetten, Pflegebetten, Bahren, Operationstische, Behandlungsstühle oder dergleichen -, dessen Steuerung für ein oder mehrere kraftangetriebene Aktuatoren (Stellgeräte, Stellmotoren, Linearantriebe, Elektromotoren, Hydraulik- bzw. Elektro-Hydraulikmotoren) zum Antreiben (Verstellen und/oder Arretieren) eines oder mehrerer Teile mit einer Erstfehlersicherung versehen ist.

Für aktive Medizinprodukte sind verschiedene elektrische Steuerungen auf dem Markt. Diese Steuerungen sind derzeit mit einer Erstfehlersicherung versehen, die darauf basiert, die Energie von den Antrieben mittels eines manuell zu betätigenden Schalters zu entkoppeln. Sofern dies durchgeführt wird, kann man sicher davon ausgehen, daß es bei den Antrieben nicht zu einem sogenannten Selbstläufer kommt.

Der Nachteil dieser Lösung ist, daß sie nicht prozeßsicher ist. Das heißt, die Sicherheit ist von der Sorgfalt und dem Verantwortungsbewußtsein des Betreibers bzw. des Anwenders abhängig. Dies ist insbesondere darin begründet, daß die Sperr-/Entriegelungsschalter bistabil ausgeführt sind. In Notsituationen kommt hinzu, daß es zu lange dauert, die Sperrfunktion aufzuheben, um das aktive Medizinprodukt beispielsweise in die Notstellung zu bringen.

Aus der US-PS 5,195,198 ist ein Krankenbett zu entnehmen, das eine Erstfehlersicherung für einen Mikroprozessor aufweist, allerdings nicht für das gesamte System.

Aus der DE 94 14 086.3 U1 ist ein elektromotorischer Möbelantrieb mit einem oder mit mehreren Stellmotoren und mit einem zur Auslösung von Funktionen mit Drucktasten und zugeordneten Schaltern bestehender Handschalter vorbekannt, wobei zur Auslösung der jeweiligen Funktionen zwei verknüpfte Schalter vorgesehen sind, wobei die beiden zugehörigen Drucktaster in einem, bezogen auf die Größe eines Drucktasters, relativ geringen Abstand zueinander angeordnet sind und daß zwischen den beiden Betätigungselementen ein gegenüber den freien Kontaktflächen vorstehender Sicherungssteg angeordnet ist. Jeder Drucktaster ist, in der Projektion gesehen, halbkreisförmig gestaltet, derart, daß die beiden Sehnen parallel und im Abstand zueinander stehen, wobei der Sicherungssteg zwischen den beiden Sehnen liegt. Die freie äußere Fläche jedes Sicherungssteges verläuft zumindest in ihrer äußeren Längsrichtung in einem Bogen. Die Drucktaster sind paarweise angeordnet, wobei jedem Paar zwei nicht weiter dargestellte, in Reihe geschaltete Schalter zugeordnet sind, so daß eine Funktion nur dann ausgelöst wird, wenn das jeweilige Paar eines Drucktasters gedrückt wird. Die Paare von Drucktastern können nicht mit einem Finger betätigt werden, sondern mit einem Finger der linken und einem Finger der rechten Hand. Die Anzahl der Drucktaster ist variabel und hängt von den Einsatzmöglichkeiten des elektronischen Möbelantriebes ab.

Auch diese Konstruktion weist keine Erstfehlersicherung des Gesamtsystems auf.

Die DE 36 01 363 A1 betrifft ein elektrisches Schaltelement zur Schaltung mehrerer voneinander sowohl im elektrischen Schaltbereich wie auch bei den mechanischen Vorkehrungen für das Zusammen- und Auseinanderführen der elektrischen Schaltkontakte voneinander unabhängig wirkender elektrischer Schaltkreise durch Druckbetätigung einer Schaltfläche, wobei mindestens eines der hintereinander angeordneten Schaltelemente ein Folien-Taster ist. Das Schaltelement dient zum Schalten von Bewegungsfunktionen an medizinischen Einrichtungen zur Lagerung von Patienten. Wenn der oberste oder äußerste Schalter als Folien-Taster ausgebildet ist, kann dieser durch Druckbetätigung kurzgeschlossen werden, und es ist möglich, durch weiteres Eindrücken des flexiblen Folien-Tasters einen darunter angeordneten weiteren elektrischen Schalter oder Taster zu betätigen. Der darunter angeordnete weitere elektrische Schalter oder Taster kann dabei ebenfalls ein Folien-Taster oder ein sonstiger elektrischer Schalter oder Taster sein.

Die DE 94 04 382.5 U1 betrifft einen Möbelantrieb mit einem oder mehreren Stellmotoren mit einem zur Auslösung von Funktionen mit Betätigungselementen bestückten Handschalter. Allen ausgewählten oder allen Betätigungselementen des Handschalters ist eine die jeweilige Funktion unmittelbar oder zeitverzögernd auslösende Zusatzschalteinrichtung zugeordnet. Die Zusatzschalteinrichtung kann ein in die Auslösung der jeweiligen Funktion verzögerndes Zeitschaltelement beinhalten.

Der Erfindung liegt die Aufgabe zugrunde, ein aktives Medizinprodukt dahingehend zu verbessern, daß eine Eigenbewegung des Systems, bedingt durch einen ersten Fehler, sicher ausgeschlossen wird.

Die Aufgabe wird durch die in **Patentanspruch 1** wiedergegebenen Merkmale gelöst.

### Definition

Unter einem 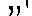 aktiven Medizinprodukt" wird gemäß § 3 Ziffer 3. MPG (Gesetz über Medizinprodukte - Medizinproduktegesetz) vom 02. August 1994 folgendes verstanden:

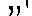 Aktives Medizinprodukt ist ein Medizinprodukt, dessen Betrieb auf eine Stromquelle oder eine andere Energiequelle als die unmittelbar durch den menschlichen Körper oder die Schwerkraft erzeugte Energie angewiesen ist. Ein Medizinprodukt, das zur Übertragung von Energie, Stoffen oder Parametern zwischen einem aktiven Medizinprodukt und dem Patienten eingesetzt wird, ohne daß dabei eine wesentliche Veränderung von Energie, Stoffen oder Parametern eintritt, wird nicht als aktives Medizinprodukt angesehen."

### Erster Fehler:

Gemäß DIN EN 60601 - 1:1990 + A1:1993 + A2:1995, Seite 14, Ziffer 2.10.11 wird folgendes verstanden:

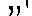 Zustand, wenn im GERÄT eine einzelne Schutzmaßnahme gegen eine GEFÄHRDUNG versagt hat oder wenn eine einzelne äußere anomale Bedingung vorliegt."

In diesem Zusammenhang ist Abschnitt 3.6 zu beachten. 3.6 lautet:

In dieser Norm sind die folgenden **ERSTEN FEHLER** Gegenstand besonderer Anforderungen und Prüfung:
a) Die Unterbrechung eines SCHUTZLEITERS (siehe Hauptabschnitt drei);
b) Die Unterbrechung eines Leiters der Stromversorgung (siehe Hauptabschnitt drei);
c) Das Auftreten einer äußeren Spannung an einem ANWENDUNGSTEIL DES TYPS F (siehe Hauptabschnitt drei);
d) Auftreten einer äußeren Spannung an einem SIGNALEINGANGS- oder SIGNALAUSGANGSTEIL (siehe Hauptabschnitt drei);
e) Undichtigkeit des GEHÄUSES, in dem ein BRENNBARES GEMISCH VON ANÄSTHESIEMITTEL MIT SAUERSTOFF ODER LACHGAS ist (siehe Hauptabschnitt sechs);
f) Auslaufen von Flüssigkeit (siehe 44.4);
g) Versagen einer elektrischen Komponente, die hierdurch eine GEFÄHRDUNG verursachen kann (siehe Hauptabschnitt neun);
h) Versagen von mechanischen Teilen, die hierdurch eine GEFÄHRDUNG verursachen können (siehe Hauptabschnitt vier);
j) Versagen des Temperaturbegrenzers (siehe Hauptabschnitt sieben).

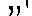 Wenn ein ERSTER FEHLER unvermeidlich einen weiteren ERSTEN FEHLER zur Folge hat, werden die zwei Fehler als ein einziger ERSTER FEHLER betrachtet."

Bei der Erfindung wird auf den Bedienelementen, zum Beispiel Handschalter, integriertes Folienbedienelement oder dergleichen, mindestens ein Sensor angebracht bzw. diesem zugeordnet, der zunächst detektiert, ob der Bediener eine Funktion initiieren möchte. Dieser Sensor könnte beispielsweise als einfache monostabile Taste ausgebildet sein (Totmanntaste) oder aber ein sensibles System darstellen, das auf Signale wie Wärme, Feuchtigkeit, Flüssigkeit oder Erschütterungen usw. reagiert, die typischerweise von Bedienern, Patienten, Anwendern oder Betreibern ausgesendet bzw. ausgelöst werden.

Mit dem so gebildeten Signal sollen die Steuer-, Bedien- und Stellfunktionen des aktiven Medizinproduktes freigegeben werden, also
- Freigabe für die Ausgangssignale/Stellsignale
- Energiezufuhr für etwaige Logikelemente/Bedienelemente

Ein Aktuator, ein Bedienelement oder eine Logikschaltung kann bei der Erfindung also immer erst dann aktiv werden, wenn der Bediener das Freigabesignal ausgelöst hat. Die Auslösung der Funktion ist aber erst möglich, wenn der Sensor generell die Energiezufuhr bereitgestellt hat, und zwar durch Detektieren der vorbestimmten Eigenschaften, wie Wärme, Feuchtigkeit, Flüssigkeit, Erschütterungen oder dergleichen. Unter Flüssigkeit kann entweder Handschweiß, oder aber auch die Körperflüssigkeit verstanden werden, so daß in diesem Fall das Betätigen des Bedienelementes mit einem toten Gegenstand, zum Beispiel mit einer Stange, noch nicht zum Antrieb des Aktuators führen kann.

Durch die Erfindung ist eine Eigenbewegung des Systems, bedingt durch einen ersten Fehler, sicher ausgeschlossen.

### Schaltungsbeispiel für die Freigabe von Funktionen mittels Tastensignal

Nomenklatur in Anlehnung an STEP 5 (Anweisungsliste; Programmiersprache Siemens AG):

| Symbol | Funktion | Kommentar |
|---|---|---|
| U | logisch UND | Reihenschaltung |
| O | logisch ODER | Parallelschaltung |
| = | Zuweisung | Relais |
| A | Stellglied | Relais oder LED |
| E | Eingangssignal | Initiator, z.B.Tastensignal |
| M | Merker | Flag oder Statussignal |

In den **Patentansprüchen 2** bis **5** sind weitere erfinderische Ausgestaltungen beschrieben.

Bei der Ausführungsform nach **Patentanspruch 2** ist der Sensor als monostabile Taste, zum Beispiel als Totmanntaste, ausgebildet.

Wird eine Ausführungsform nach **Patentanspruch 3** gewählt, so kann ein Statussignal, zum Beispiel eine LED, auf dem Bedienfeld anzeigen, daß die Steuer-, Bedien- und Stellfunktionen freigegeben sind.

In **Patentanspruch 4** ist ein Schaltplan in AWL-Schreibweise (Anwendungsliste) beschrieben. Hierbei wurde die Nomenklatur in Anlehnung an STEP 5 der Programmiersprache Siemens verwendet. Die Realisierung erfolgt nicht durch eine Software-, sondern durch eine Hardware-Schaltung.

In **Patentanspruch 5** ist eine weitere vorteilhafte Ausführungsform der Erfindung erwähnt. Das Einschalten der Energiezufuhr kann nach dem Detektieren der vorbestimmten Eigenschaften durch eine oder mehrere Dioden, eine Beleuchtung oder sonstige optische Anzeige angezeigt werden. Des weiteren ist es möglich, die Beleuchtung auch zum Kenntlichmachen der Schalter heranzuziehen, damit im Dunkeln, zum Beispiel in einem abgedunkelten Krankenzimmer, die Schaltung besser zu bedienen ist.

### Literaturverzeichnis

- US-PS: 5,195,198
- DE: 36 01 363 A1
- DE: 94 04 382.5 U1
- DE: 94 14 086.3 U1
- Prospekt:: 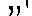 Ultrasonic Sensor", Murata Manufacturing Co., Ltd.
- Prospekt:: 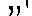 MAIL" 11/1997, Murata Manufacturing Co., Ltd.
- Prospekt:: 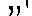 Meßumformer für Feuchte und Temperatur", Testo GmbH & Co., 0980.3612/ve/S/01.98
- Prospekt:: 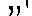 Einbau-Temperaturfühler auf Wunsch", Testo GmbH & Co. 0980.4155
- Prospekt:: 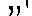 Piezoelectric Ceramic Sensors (Piezotite®), Cat.No.P19E-6, Murata Manufacturing Co., Ltd.
- Prospekt:: 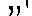 1997 Murata Products Europe", Murata Manufacturing Co., Ltd.
- Prospekt:: 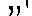 Pyroelectric Infrared Sensor & Sensor Module", Cat.No. S21E-1, Murata Manufacturing Co., Ltd.
- Prospekt:: 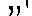 Rotation Sensor FR Series", Cat.No. S35E, Murata Manufacturing Co., Ltd.
- Prospekt:: 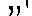 Entran® Sensoren" Kurzformkatalog, Lagerprogramm für Europa, 1996/6
- Prospekt:: 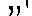 Simatic S5", Katalog ST 52, Teil A - August 1985, Siemens

## Patentansprüche

1. Aktives Medizinprodukt - Liegemöbel, vornehmlich Krankenbetten, Pflegebetten, Bahren, Operationstische, Behandlungsstühle oder dergleichen -, dessen Steuerung für einen oder für mehrere kraftangetriebene Aktuator bzw. Aktuatoren (Stellgeräte, Stellmotoren, Linearantriebe, Elektromotoren, Hydraulik- bzw. Elektro-Hydraulikmotoren) zum Antreiben (Verstellen und/oder Arretieren) eines oder mehrerer Teile des aktiven Medizinproduktes mit einer Erstfehlersicherung versehen sind, mit einem oder mehreren Bediengeräten für den betreffenden Aktuator, durch das die Energiezufuhr ein- und abschaltbar ist, wobei dem betreffenden Bediengerät mindestens ein Sensor oder Taster zugeordnet ist, der erst auf eine vorbestimmte Eigenschaft der Bedienperson oder auf Erschütterungen detektiert oder reagiert, ob die Person eine Funktion initiieren will, worauf erst dann die Energiezufuhr für die Steuer-, Bedien- und Stellfunktionen des aktiven Medizinproduktes freigegeben wird und nach Betätigung des Bediengerätes, zum Beispiel eines Knopfes, die beabsichtigte Funktion, zum Beispiel die Winkelverstellung einer Rückenlehne, das Aufund Abfahren eines Krankenbettes, die Neigung eines Gliederrahmenbettes, Trendelenburg-Funktion, Einstellen eines bestimmten Winkels zwischen Fuß- und Herzteil oder dergleichen, durchführbar ist, sofern nicht andere Bedingungen dem entgegenstehen.

2. Aktives Medizinprodukt nach Anspruch 1, **dadurch gekennzeichnet,** daß der Sensor auf Signale wie Wärme, Feuchtigkeit, Flüssigkeit, Erschütterungen oder dergleichen, zum Beispiel auf die Körperflüssigkeit oder die Temperatur der Bedienperson, reagiert.

3. Aktives Medizinprodukt nach Anspruch 1 oder einem der darauffolgenden Ansprüche, **dadurch gekennzeichnet,** daß ein Statussignal, zum Beispiel eine LED auf einem Bedienfeld anzeigt, daß die Steuer-, Bedien- oder Stellfunktionen freigegeben sind.

4. Aktives Medizinprodukt nach Anspruch 1 oder einem der darauffolgenden Ansprüche **gekennzeichnet durch** folgende Hardware-Schaltung in AWL-Schreibweise:
U E_Taste_Enable * z. B. Totmanntaste
= A_Enable * Relais Energiezufuhr
U A_Enable * Relais Energiezufuhr
= A_LED_Enable * Indikator Energie ist zugeschaltet
U A_Enable * Relais Energiezufuhr
U E_Taste_Steuerfunktion_X * beliebige Funktionstaste X
U M_Freigabe_Steuerfunktion_X * alle logischen Bedingungen zur Freigabe erfüllt
= A_Steuerfunktion_X * aktiviere Aktuator_X

5. Aktives Medizinprodukt nach Anspruch 1 oder einem der darauffolgenden Ansprüche, **dadurch gekennzeichnet,** daß der Sensor und/oder das Bedienelement mit einer nach dem Detektieren der vorbestimmten Eigenschaften automatisch einschaltbaren Beleuchtung, Diode oder sonstigen optischen Einrichtungen versehen ist.
